# EUROPÄISCHE PATENTSCHRIFT

(11) **EP 2 086 786 B1**
(45) Veröffentlichungstag und Bekanntmachung des Hinweises auf die Patenterteilung: **12.01.2011**
(21) Anmeldenummer: 07822442.5
(22) Anmeldetag: 09.11.2007
(51) Int. Cl.: B60K 35/00

(54) **BEDIENEINHEIT FÜR EIN KRAFTFAHRZEUG MIT "BLACK-PANEL" EFFEKT**
OPERATING UNIT FOR A MOTOR VEHICLE WITH BLACK-PANEL EFFECT
UNITÉ DE COMMANDE POUR UN VÉHICULE AUTOMOBILE AVEC EFFET TABLEAU NOIR

(30) Priorität: 10.11.2006 DE 102006053043
(43) Veröffentlichungstag der Anmeldung: 12.08.2009
(73) Patentinhaber: Leopold Kostal GmbH & Co. KG, 58513 Lüdenscheid (DE)
(72) Erfinder: BRAEKER, Tobias, 58313 Herdecke (DE); ZIEBKO, Edward, 58791 Werdohl (DE); KUNERT, Frank, 58507 Lüdenscheid (DE); GROSSE HÖÖTMANN, Ingo, 80807 München (DE); MARKUS, Bettina, 46284 Dorsten (DE); LAUBROCK, Arno, 44269 Dortmund (DE); NEUMANN, Carsten, 44137 Dortmund (DE)
(74) Vertreter: Kerkmann, Detlef
(86) Internationale Anmeldenummer: PCT/EP2007/062153
(87) Internationale Veröffentlichungsnummer: WO 2008/055978

(56) Entgegenhaltungen:
- WO-A-2005/035299
- DE-A1- 19 831 002
- DE-A1-102004 009 208
- JP-A- 8 282 318
- JP-A- 2002 178 362
- US-A- 4 991 535
- US-A- 5 159 892
- US-A- 5 780 965
- US-B1- 6 409 355

## Beschreibung

Die Erfindung betrifft eine Bedieneinheit für ein Kraftfahrzeug, umfassend zumindest ein Bedienelement sowie eine diesem zugeordnete Beleuchtung, welche in einem Gehäuse benachbart zueinander angeordnet sind, wobei die Beleuchtung eine Lichtquelle, eine von dieser durchleuchtbare Öffnung in einer Wand des Gehäuses sowie einen zwischen der Lichtquelle und der Öffnung angeordneten Lichtleiter umfasst, und wobei die die Öffnung aufweisende Gehäusewand sichtseitig zumindest teilweise von einer für das Licht der Lichtquelle im wesentlichen transparenten Blende abgedeckt ist, welche auf ihrer Rückseite mit der Oberfläche der Gehäusewand innig verbunden ist.

Solche Bedieneinheiten werden beispielsweise in der Mittelkonsole eines Kraftfahrzeugs zur Bedienung verschiedener Fahrzeugfunktionen eingesetzt. Die Beleuchtung signalisiert dabei z.B. als sogenannte Funktionsbeleuchtung den Betriebszustand des ihr jeweils zugeordneten Bedienelements bzw. der mit diesem zu beeinflussenden Funktion.

Um der sichtbaren Oberfläche der Bedieneinheit ein einheitliches Aussehen zu verleihen, ist es erwünscht, die Beleuchtung im nichtaktivierten Zustand quasi unsichtbar werden zu lassen. Dieser insbesondere in Verbindung mit einer schwarzen Bedienoberfläche auch als "Black-Panel" bekannte Verschwinde-Effekt, soll eine hochwertige Anmutung des Erscheinungsbildes der Bedieneinheit bewirken.

Die deutsche Offenlegungsschrift DE 10 2004 009 208 A1 sowie die US Patentschrift 5,159,892 offenbaren jeweils Gegenstände gemäß dem Oberbegriff des Patentanspruchs 1.

Aus der DE 198 31 002 A1 ist es bekannt, den Lichtübergang zwischen zwei Objekten durch den Einsatz eines Silikonmaterials verlustfrei zu gestalten.

Die Bedieneinheit gemäß der vorliegenden Erfindung hat gegenüber bisher bekannten Bedieneinheiten den Vorteil, einen sehr wirkungsvollen Verschwinde-Effekt im nichtaktivierten Zustand der Beleuchtung mit einer dennoch kräftigen, insbesondere auch verschiedene Farben deutlich hervortreten lassenden Beleuchtung im aktivierten Zustand zu verbinden.

Dies wird erfindungsgemäß dadurch ermöglicht, dass der Zwischenraum zwischen der Blende und dem darunter liegenden Lichtleiter durch ein Ankoppelelement aus einem zumindest weitgehend transparenten thermoplastischen Elastomer gefüllt ist, und dass der Lichtleiter und das Ankoppelelement ein Zweikomponenten-Spritzgussteil bilden.

In einer besonders vorteilhaften Ausführungsform der erfindungsgemäßen Bedieneinheit bestehen das Gehäuse aus einem opaken, schwarzen Kunststoff und die Blende aus einem klartransparenten Kunststoff, welche in einem Zweikomponenten-Spritzgussverfahren hergestellt und dabei miteinander verbunden werden.

In einer vorteilhaften Weiterbildung der erfindungsgemäßen Bedieneinheit ist der klartransparente Kunststoff der Blende mit einer schwarzen Einfärbung versehen, was einen noch weiter verbesserten Verschwinde-Effekt bewirkt.

Eine besonders effektive Ausnutzung des von der Lichtquelle abgestrahlten Lichts im aktivierten Zustand der Beleuchtung wird dadurch erreicht, dass zwischen der Lichtquelle und der Öffnung in der Gehäusewand ein Lichtleiter angeordnet ist, welcher in einer bevorzugten Ausführungsform zumindest abschnittsweise diffustransparent ausgeführt ist.

Nachfolgend ist die Erfindung anhand eines Ausführungsbeispiels unter Bezugnahme auf die beigefügte Zeichnung erläutert.

Dabei zeigt:
- **Fig. 1:**: eine Ansicht einer erfindungsgemäßen Bedieneinheit
- **Fig. 2:**: einen Schnitt durch die in Fig. 1 gezeigte Bedieneinheit im Bereich einer Beleuchtung

Wie in der Zeichnung zu erkennen ist, umfasst die erfindungsgemäße Bedieneinheit eine Reihe von als Drucktasten ausgeführten Bedienelementen 1, die in einem Gehäuse 2 aus schwarzen Kunststoff nebeneinander angeordnet sind. Jedem dieser Bedienelemente 1 ist eine Beleuchtung zugeordnet, welche neben dem entsprechenden Bedienelement 1 angeordnet ist. Es handelt sich in diesem Falle um eine zur Signalisierung des Betriebszustands des Bedienelements bzw. der mit diesem zu beeinflussenden Funktion vorgesehene Funktionsbeleuchtung. Zur Realisierung der Beleuchtung weist die sichtseitige Wand 2' des Gehäuses 2 neben den Oberflächen der Bedienelemente 1 jeweils eine schlitzförmige Öffnung 4 auf. Unterhalb dieser Öffnungen 4 befinden sich auf einer Leiterplatte 6 Leuchtdioden 3, die mit ihrem Licht die Öffnungen 4 durchleuchten können.

Das Licht der Leuchtdioden 3 wird von Lichtleitern 7, die aus einem diffustransparenten Kunststoff bestehen, zu den entsprechenden Öffnungen 4 geleitet und dort besonders gleichmäßig abgestrahlt.

Die Sichtseite der Gehäusewand 2' mit den Öffnungen 4 zum Lichtdurchtritt ist im Bereich neben den Bedienelementen 1 von einer Blende 5 abgedeckt. Die Blende 5 umfasst dabei mit ihrer quasi C-förmigen Kontur die Bedienelemente 1. Die Blende 5 besteht aus einem für das Licht der Lichtquellen 3 transparenten Kunststoff.

Bei dem Material der Blende 5 handelt es sich im wesentlichen um einen klartransparenten Werkstoff wie z.B. PMMA, welcher zu Verbesserung des Verschwinde-Effekts der Öffnungen 4 optional jedoch mit einer mehr oder weniger starken schwarzen Einfärbung versehen werden kann.

Die transparente Blende 5 ist auf ihrer Rückseite mit der Oberfläche der Gehäusewand 2' innig verbunden, was z.B. dadurch erreicht werden kann, dass das Gehäuse 2 und die Blende 5 in einem Zweikomponenten-Spritzgussverfahren hergestellt und dabei miteinander verbunden werden. Diese innige Verbindung der beiden Oberflächen bewirkt, dass Licht, welches von außen auf die Bedieneinheit und damit auf die Blende 5 trifft, nicht von der rückseitigen Oberfläche der Blende 5 reflektiert sondern von dem schwarzen Kunststoff der Oberfläche der Gehäusewand 2' absorbiert wird. Für den Betrachter hat es dadurch den Anschein, als ob die Blende 5 selbst aus einem glänzenden schwarzen Kunststoff bestünde.

Lediglich im Bereich der Öffnungen 4 in der Gehäusewand 2' für den Lichtdurchtritt der Beleuchtung können Reflexionen im Auflicht auftreten, so dass diese je nach Blickwinkel noch sichtbar sind.

Eine Möglichkeit, um diesem Umstand abzuhelfen, besteht in der bereits erwähnten schwarzen Einfärbung des an und für sich klartransparenten Materials der Blende 5, wobei jedoch immer ein Kompromiss zwischen der Verbesserung des Verschwinde-Effekts im Auflicht und der Verschlechterung der Sichtbarkeit des Lichts der Leuchtdioden 3 im Durchlicht eingegangen werden muss.

Eine weitere Möglichkeit, Reflexionen im Auflicht im Bereich der Öffnungen 4 in der Gehäusewand 2' zu vermeiden, besteht darin, den Zwischenraum 8 zwischen der Blende 5 und dem darunter liegenden Lichtleiter 7 durch ein Immersionsmittel aufzufüllen und die beiden Teile somit optisch miteinander zu koppeln. Gemäß einem nicht von der Erfindung umfassten Beispiel kann dies durch Füllung des Zwischenraums 8 mit einem Silikonmaterial erfolgen, welches elastisch ist, und somit in einen innigen Kontakt sowohl mit der rückseitigen Oberfläche der Blende 5 als auch mit der sichtseitigen Oberseite des Lichtleiters 7 gebracht werden kann.

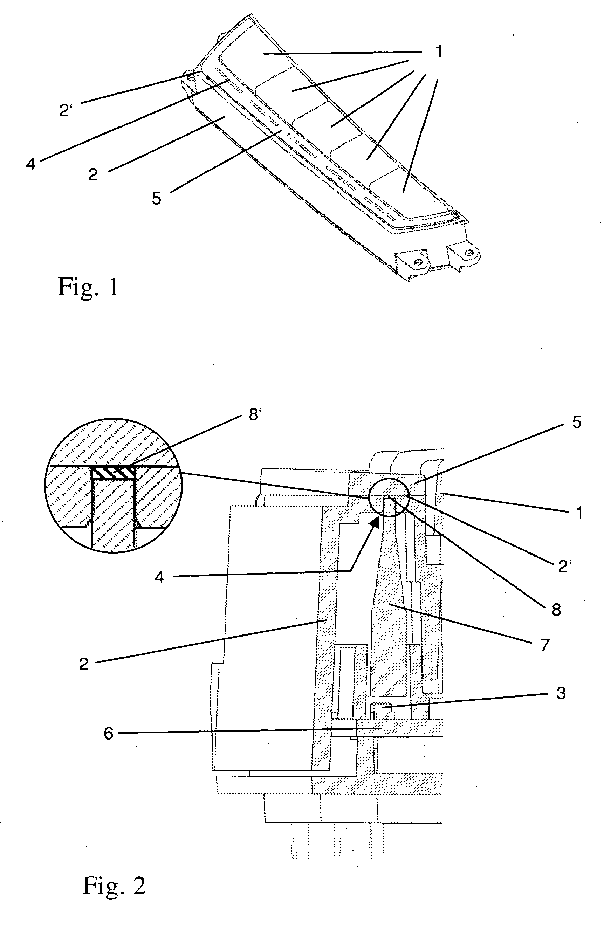

Gemäß der Erfindung wird der Zwischenraum 8 durch ein zumindest weitgehend transparentes, thermoplastisches Elastomer gefüllt, welches, wie in dem vergrößert dargestellten Detail-Bereich in Fig. 2 gezeigt, als Ankoppelelement 8' direkt an den Lichtleiter 7 angespritzt ist. Der Lichtleiter 7 wird dabei mit dem Ankoppelelement 8' als Zweikomponenten-Spritzgussteil hergestellt.

Lichtstrahlen , die von außen auf die Blende 5 treffen, werden dann auch im Bereich der Öffnungen 4 nicht mehr von der rückseitigen Oberfläche der Blende 5 reflektiert, sondern vielmehr durch den Lichtleiter 7 in das Innere des Gehäuses 2 geleitet. Dort treten sie dann zum größten Teil nach einer oder mehreren Reflexionen aus dem Lichtleiter 7 aus. Die wenigen Lichtstrahlen, welche dabei auch wieder zu der Öffnung 4 zurückreflektiert werden und dort austreten, beinträchtigen das Erscheinungsbild so gut wie überhaupt nicht.

## Patentansprüche

1. Bedieneinheit für ein Kraftfahrzeug, umfassend zumindest ein Bedienelement (1) sowie eine diesem zugeordnete Beleuchtung, welche in einem Gehäuse (2) benachbart zueinander angeordnet sind, wobei die Beleuchtung eine Lichtquelle (3), eine von dieser durchleuchtbare Öffnung (4) in einer Wand (2') des Gehäuses (2) sowie einen zwischen der Lichtquelle (3) und der Öffnung (4) angeordneten Lichtleiter (7) umfasst, und wobei die die Öffnung (4) aufweisende Gehäusewand (2') sichtseitig zumindest teilweise von einer für das Licht der Lichtquelle (3) im wesentlichen transparenten Blende (5) abgedeckt ist, welche auf ihrer Rückseite mit der Oberfläche der Gehäusewand (2') innig verbunden ist, **dadurch gekennzeichnet, dass** der Zwischenraum (8) zwischen der Blende (5) und dem darunter liegenden Lichtleiter (7) durch ein Ankoppelelement (8') aus einem zumindest weitgehend transparenten thermoplastischen Elastomer gefüllt ist, und dass der Lichtleiter (7) und das Ankoppelelement (8') ein Zweikomponenten-Spritzgussteil bilden.

2. Bedieneinheit nach Anspruch 1, **dadurch gekennzeichnet, dass** das Gehäuse (2) und die Blende (5) ein Zweikomponenten-Spritzgussteil bilden.

3. Bedieneinheit nach Anspruch 1 oder 2, **dadurch gekennzeichnet, dass** das Gehäuse (2) aus einem opaken Kunststoff besteht, und dass die Blende (5) aus einem klartransparenten Kunststoff besteht.

4. Bedieneinheit nach Anspruch 3, **dadurch gekennzeichnet, dass** der opake Kunststoff des Gehäuses (2) schwarz ist, und dass der klartransparente Kunststoff der Blende (5) mit einer schwarzen Einfärbung versehen ist.

5. Bedieneinheit nach einem der Ansprüche 1 bis 4, **dadurch gekennzeichnet, dass** der Lichtleiter (7) zumindest abschnittsweise diffustransparent ausgeführt ist.

6. Bedieneinheit nach einem der Ansprüche 1 bis 5, **dadurch gekennzeichnet, dass** die Beleuchtung eine zur Signalisierung des Betriebszustands des Bedienelements (1) und/oder der mit diesem zu beeinflussenden Funktion vorgesehene Funktionsbeleuchtung ist.

## Claims

1. Operating unit for a motor vehicle comprising at least one control element (1) and a lighting unit assigned to the same that are located adjacent to each other in a housing (2), with the lighting unit consisting of a light source (3), an aperture (4) through which this can shine in one wall (2') of the housing (2), and a light guide (7) located between the light source (3) and the aperture (4), and with the housing wall (2') that features the aperture (4) being concealed on the visible side, at least partially, by a shield (5) which is essentially transparent for the light from the light source (3) and which is integrally connected with its reverse side to the surface of the housing wall (2'), **characterised in that** the space (8) between the shield (5) and the light guide (7) lying below it is filled by a coupling element (8') made of a thermoplastic elastomer which is transparent at least to a large degree, and that the light guide (7) and the coupling element (8') form a two-component injection-moulded part.

2. Operating unit in accordance with Claim 1, **characterised in that** the housing (2) and the shield (5) form a two-component injection-moulded part.

3. Operating unit in accordance with Claim 1 or Claim 2, **characterised in that** the housing (2) is made of opaque plastic and that the shield (5) is made of clear transparent plastic.

4. Operating unit in accordance with Claim 3, **characterised in that** the opaque plastic of the housing (2) is black and that the clear transparent plastic of the shield (5) is provided with a black colouring.

5. Operating unit in accordance with any of Claims 1 to 4, **characterised in that** the light guide (7) is, at least section-wise, diffused-transparent.

6. Operating unit in accordance with any of Claims 1 to 5, **characterised in that** the lighting unit is a functional lighting unit provided for signalling the operating state of the control element (1) and/or of the function to be influenced by using the same.

## Revendications

1. Unité de commande pour un véhicule automobile, qui comprend au moins un élément de commande (1) et un dispositif d'éclairage, associé à celui-ci, lesquels sont disposés à proximité l'un de l'autre, dans un boîtier (2), le dispositif d'éclairage comprenant une source de lumière (3), une ouverture (4), qui, pratiquée dans une paroi (2') du boîtier (2), peut être traversée par ladite source de lumière, ainsi qu'un guide de lumière (7) qui est disposé entre la source de lumière (3) et l'ouverture (4), et la paroi (2') du boîtier, qui est pourvue de l'ouverture (4), étant couverte, au moins partiellement par un cache (5) essentiellement transparent à la lumière de la source de lumière (3), qui, sur la face arrière, est intimement relié à la surface de la paroi (2') du boîtier, **caractérisée en ce que** l'intervalle (8), entre le cache (5) et le guide de lumière (7), situé au-dessous de celui-ci, est rempli par un élément de couplage (8') en élastomère thermoplastique, transparent au moins dans la plus grande mesure possible, et **en ce que** le guide de lumière (7) et l'élément de couplage (8') forment une pièce à deux composants moulée par injection.

2. Unité de commande selon la revendication 1, **caractérisée en ce que** le boîtier (2) et le cache (5) forment une pièce moulée par injection à deux composants.

3. Unité de commande selon revendication 1 ou 2, **caractérisée en ce que** le boîtier (2) consiste en matière synthétique, opaque, et que le cache (5) consiste en matière synthétique de transparence limpide.

4. Unité de commande selon la revendication 3, **caractérisée en ce que** la matière synthétique formant le boîtier (2) est noire et que la matière synthétique, de transparence limpide, du cache (5) est pourvue d'une teinture noire.

5. Unité de commande selon l'une des revendications 1 à 4, **caractérisée en ce que** le guide de lumière (7) est, au moins sections, de transparence diffuse.

6. Unité de commande selon l'une des revendications 1 à 5, **caractérisée en ce que** le dispositif d'éclairage est un éclairage fonctionnel, qui est prévu pour la signalisation de l'état de fonctionnement de l'élément de commande (1) et / ou de la fonction devant être influencée par celui-ci.
